# EUROPEAN PATENT APPLICATION

(11) **EP 2 612 765 A2**
(43) Date of publication of application: **10.07.2013**
(21) Application number: 12199803.3
(22) Date of filing: 31.12.2012
(51) Int. Cl.: B60B 1/04, B60B 21/06

(54) **Rim assembly**

(30) Priority: 04.01.2012 TW 101100288
(71) Applicant: Kunshan Henry Metal Technology Co., Ltd., Jiangsu 215300 (CN)
(72) Inventor: Tho, Kee Ping, Kunshan (CN)
(74) Representative: Chaillot, Geneviève

(57) **Abstract**

A rim assembly includes a rim having multiple positioning portions extending from the inner periphery thereof and each positioning portion has a space defined therein. Each positioning portion further has an open side. Multiple spoke units each have the first end engaged with the space via the open side and are rotatable relative to the positioning portion. The second end of each spoke unit is connected with the hub. Each spoke unit has a securing member and positioning member which is mounted to the securing member. The securing member is connected with one end of a spoke and the positioning member positions the securing member and the spoke in the space. The spoke units are easily and quickly assembled with the positioning portions at the inner periphery of the rim.

## Description

### FIELD OF THE INVENTION

The present invention relates to a rim assembly, and more particularly, to a rim of a tube-less bicycle or auto-bike wheel wherein the spikes can be installed to the rim from later side of the rim.

### BACKGROUND OF THE INVENTION

Wheels are directly in contact with the road so as to drive the bicycle or auto-bike forward and backward. The conventional wheel generally comprises the rim, the tire and the hub. Spokes are connected between the rim and the hub.

The rim provides supporting means for the tire and is made by stiffer material so as to form a ring-shaped body. The soft tire is mounted to the outer periphery of the rim to buffer impact to the rim when the wheel rolls on the road. The spokes maintain the tension of the rim to keep the rim as a circle so that the wheel rolls on the road smoothly.

There are two types of spokes which are band-like spokes and string-like spokes. The band-like spokes are connected between the hub and the rim and one rim usually has three or five band-like spokes. The string-like spokes each have smaller diameter and are connected between the hub and the rim. The band-like spokes are usually used for the rims of auto bikes and the string-like spokes are usually used for the rims of bicycles.

The wheels generally are cataloged as tube tire or tube-less tire. The tube tire includes a tube located between the tire and the rim, and air is introduced to inflate the tube so as to keep the tire as a circle. The tube-less tire does not have the tube between the tire and the rim, air is directly filled in the space between the tire and the rim. The tube-less tire requires higher sealing standard to keep the tire to be functioned.

Taiwan Utility Model No. 962040632 discloses a rim with multiple spokes connected between the rim and the hub. Each spoke has an end portion which is connected with the holes of the rim by a threaded rod and a nut. The end member has a curved surface to which the spoke is connected. The threaded rod has a sink hole which accommodates the curved surface of the end portion so that the spoke is easily connected with the end portion. The curved surface allows the spoke to be adjusted angularly.

Taiwan Utility Model No. 94111342 discloses a rim and each spoke has a connector which is connected to the threaded portion of the spoke. The connector is connected to the rim. A sleeve has a flange on the first end thereof, the flange is larger than the hole of the rim. A connection end is located on the second end of the sleeve and has multiple axial slits defined therein. The connection end includes double layers and the diameter of the connection end is smaller than the hole of the rim. The connector has a head which is smaller than the holes of the rim. The sleeve is connected with the connector and inserted into the hole of the rim, the wall of the sleeve is expanded to be securely engaged with the hole. There is a gap located between the connection end and the periphery of the hole such that the spoke is conveniently pivoted and installed.

Taiwan Utility Model No. 90210489 discloses a spoke which has a threaded portion and the threaded portion is hooked to the hole in the rim. A sleeve has outer threads defined in the outside thereof and the outer threads are made according to the threads of the hole of the rim. A nut has inner threads which are made accordingly the outer threads of the sleeve. The nut has a wide hat. The sleeve has a passage defined axially therethrough and the inner wall of the sleeve is gradually narrowed to form a base for being used with the wide hat or the threaded portion. The base has an entry interface on the extension portion thereof and the diameter of the passage is larger than the nut or the wide hat and the spoke. The nut is mounted to the passage of the sleeve to form a joint.

For the Taiwan Utility Model No. 962040632, the rim has holes drilled from the outer periphery thereof so as to threadedly secure the spokes. There are holes in the outer periphery of the rim and cannot have better sealing feature between the tire and the rim. Therefore, the inner tube is needed.

For the Taiwan Utility Model No. 90210489 and 94111342, the rim does not have holes drilled from the outer periphery thereof. The Taiwan Utility Model No. 94111342 has a sleeve which is mounted to the connector and the other end of the connector is threadedly connected with the spoke. The connector is inserted into the hole of the rim and then the connector is pulled out from the hole. The connection end of the sleeve is expanded to be secured with the hole of the rim. Taiwan Utility Model No. 90210489 discloses a sleeve which is mounted to the spoke and then the sleeve is threadedly connected to the inner periphery of the rim.

For Taiwan Utility Model No. 94111342, the spoke may not be inserted into the connection end so that the connection end cannot be expanded when the spoke is pulled. Besides, when installing the spoke, the sleeve may be stocked with the sleeve and the spoke cannot be pulled out. Once the situation happens, the whole rim and spokes have to be discarded. When maintaining the wheel, the spokes are difficult to be pulled out, the related parts for securing the spokes have to be removed, this causes serious maintenance problems. For Taiwan Utility Model No. 90210489, when threading the sleeve to the rim, the spokes become obstacles of the threading actions. Besides, the requirement of precision of manufacturing the threads in the sleeve is high and this increases the manufacturing cost.

### SUMMARY OF THE INVENTION

The present invention relates to a rim assembly and comprises a rim having multiple positioning portions extending from the inner periphery thereof and each positioning portion has a space defined therein. Each positioning portion further has an open side. Multiple spoke units each have the first end engaged with the space via the open side and are rotatable relative to the positioning portion. The second end of each spoke unit is connected with the hub. Each spoke unit has a securing member and positioning member which is mounted to the securing member. The securing member is connected with one end of a spoke and the positioning member positions the securing member and the spoke in the space. The spoke units are easily and quickly assembled with the positioning portions at the inner periphery of the rim.

The primary object of the present invention is to provide a rim assembly wherein the spokes are connected with the rim from the lateral side of the rim.

Another object of the present invention is to provide a rim assembly wherein the positioning portions are located at the inner periphery of the rim so as to be connected with the spokes. The positioning portions are small so as to reduce the weight of the rim.

Yet another object of the present invention is to provide a rim assembly wherein the structure of the spoke units is simple and the rim does not need to be manufactured with high precision. The manufacturing and maintaining cost are reduced.

The present invention will become more obvious from the following description when taken in connection with the accompanying drawings which show, for purposes of illustration only, a preferred embodiment in accordance with the present invention.

### BRIEF DESCRIPTION OF THE DRAWINGS

Fig. 1 is a perspective view to show the rim assembly of the present invention;
Fig. 2 is an exploded view to show the rim assembly of the present invention;
Fig. 3 is a partial cross sectional view of the rim assembly of the present invention;
Fig. 4 is a cross sectional view of the connection of the positioning portion and the spoke unit;
Fig. 5 is an enlarged cross sectional view to show the spoke connected to the positioning portion of the rim;
Fig. 6 is an exploded view to show a second embodiment of the rim assembly of the present invention;
Fig. 7 is an exploded view to show the second embodiment of the rim assembly of the present invention;
Fig. 8 is an exploded view to show the third embodiment of the rim assembly of the present invention, and
Fig. 9 is an exploded view to show the fifth embodiment of the rim assembly of the present invention.

### DETAILED DESCRIPTION OF THE PREFERRED EMBODIMENT

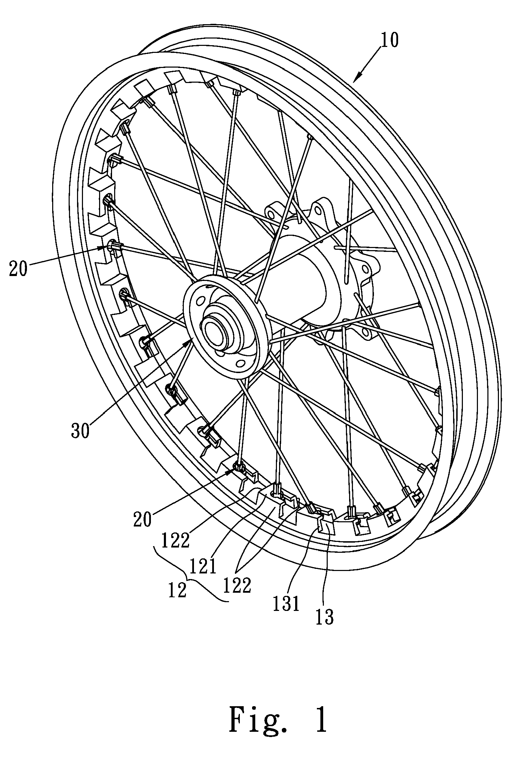

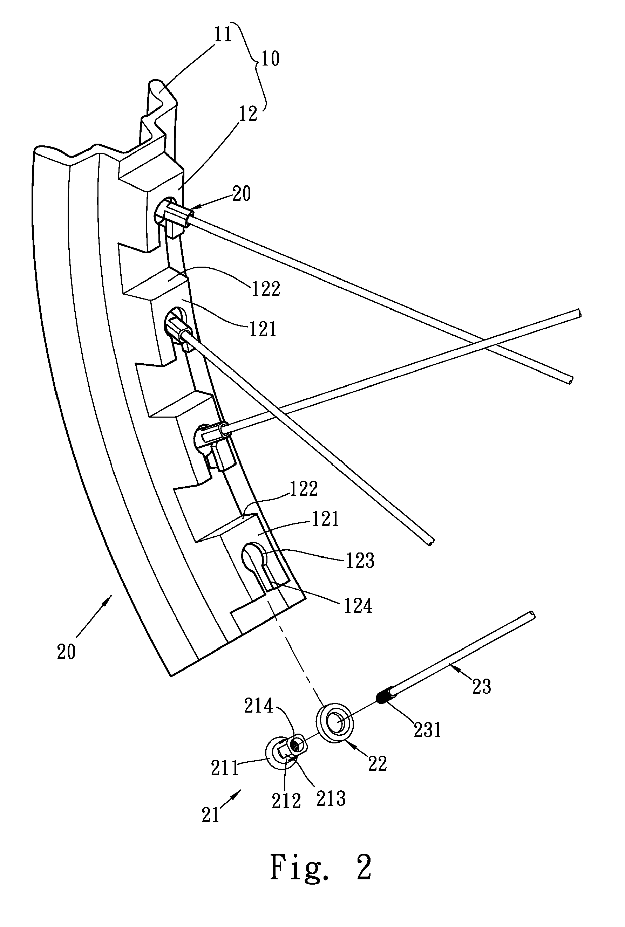

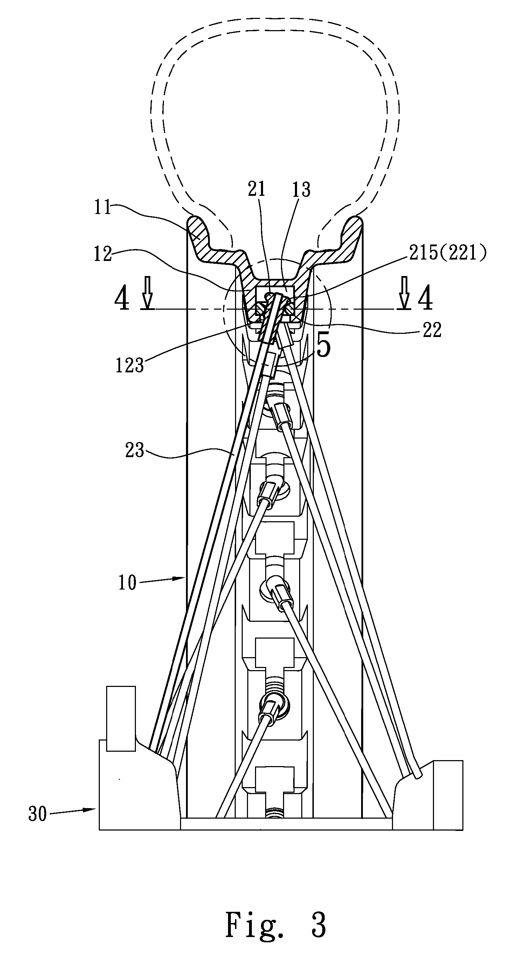

Referring to Figs. 1 to 5, the rim assembly of the present invention of a bicycle or an auto bike comprises a rim 10, multiple spoke units 20 and a hub 30.

The rim 10 is a circular rim and has circular body 11 with multiple positioning portions 12 extending from the inner periphery of the rim 10. Each positioning portion 12 extends toward the center of the rim 10 a certain height. Each positioning portion 12 has a space 13 defined therein and each positioning portion 12 has an open side 131. Each positioning portion 12 is a hollow case with a top face 121 and three side faces 122. The top face 121 has a hole 123 defined therethrough and the hole 123 communicates with the space 13. The spoke unit 20 is inserted into the hole 123. A slot 124 is defined through the top face 121 which communicates between the hole 123 and one of the side face 131.

Each of the spoke units 20 has the first end engaged with the space 13 via the open side 131 and the slot 124, and the spoke unit 20 is rotatable relative to the positioning portion 12. The second end of each spoke unit 20 is connected with the hub 30. Each spoke unit 20 has a securing member 21 and positioning member 22 which is mounted to the securing member 21. The securing member 21 is connected with one end of the spoke 23. The positioning member 22 positions the securing member 21 and the spoke 23 in the space 13. The securing member 21 has an engaging portion 211 and a clamping portion 212 which is connected to the engaging portion 211. The engaging portion 211 has a flange which is engaged with the top face 122 of the positioning portion 12. The clamping portion 212 extends from the positioning member 22 and protrudes beyond the positioning portion 12 so as to be connected to the spoke 23. The clamping portion 212 has multiple surfaces 213 which can be clamped by a tool when installing the spoke 23. The clamping portion 212 has a first threaded portion 214 defined therein and the spoke 23 has a second threaded portion 231 which is connected to the first threaded portion 214. The engaging portion 211 has a first face 215 and the positioning member 22 has a second face 221 which is matched with the first face 215. The first and second faces 215, 221 are two inclined faces.

The spoke units 20 are easily connected to the positioning portions 12 from the lateral side of the rim. The positioning portions 12 are discontinuously formed on the rim 10 so as to reduce the weight of the rim 10.

When in assembling, the second threaded portion 231 is connected to the second threaded portion 214 of each of the spokes 23, and the spokes 23 are connected to the positioning portions 12. The engaging portion 211 has larger diameter and cannot pass through the side of the positioning portion 12. The spoke 23 passes through the slot 124 and then moves into the hole 123 until the positioning member 22 is engaged with the inside of the space 13. The spokes 23 are able to be connected to the positioning portions 12 one by one.

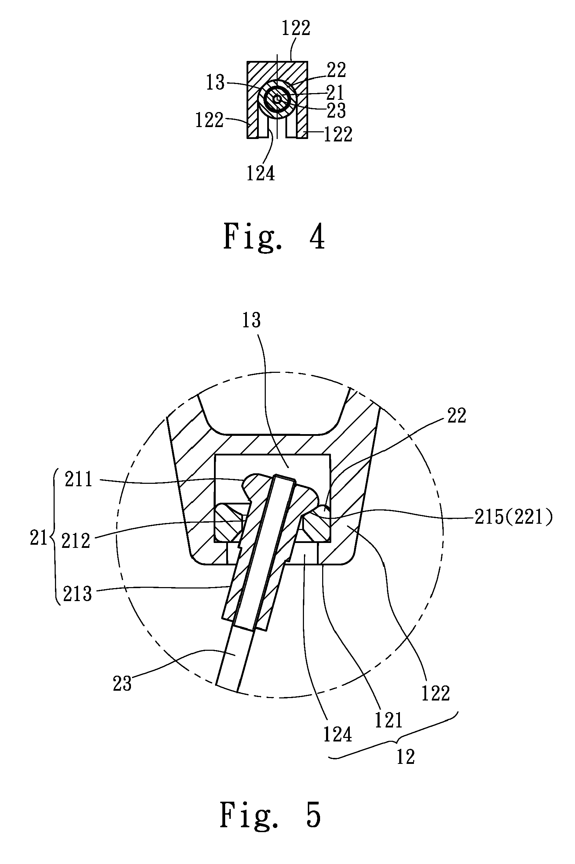

As shown in Fig. 4, the lateral side of the positioning member 22 is engaged with the inside of the space 13 to secure the connection. As shown in Fig. 5, the second end of each of the spokes 23 are inclinedly connected to the hub 30. The securing member 21 is also inclined as the spoke 23. The first face 215 is partially matched with the second face 221. Because the engaging portion 211 has larger diameter so that the spoke 23 and the securing member 21 do not disengaged from the positioning portion 12.

The rim 10 of the present invention has the positioning members 12 on the inner periphery thereof and each positioning member 12 has the open side 131 and has the space 13 defined therein. The spoke units 20 are easily connected to the positioning portions 12 via the open side 131 and the space 13. The positioning member 22 is easily engaged with the space 13 by one action without using tools or special chucks. Compared with the conventional threading way to install the spokes 23, the installation of the spokes 23 of the present invention is convenient and quick. The spoke units 20 are also easily removed from the positioning portions 12. The rim 10 is not damaged when replacing the spoke units 20.

The rim 10 can be made integrally with the ring-shaped body 11, the positioning portions 12, the spaces 13, the holes 123 and the slots 124. The positioning portions 12 are arranged evenly spaced to reduce the weight of the rim 10.

The manufacturing processes of the positioning members 22 and the spokes 23 are simple without special machining requirements. The engagement between the positioning portions 12 and the spokes 23 does not require high precision. The clamping portion 212 provides a position for the tool to clamp when connecting the spokes 23.

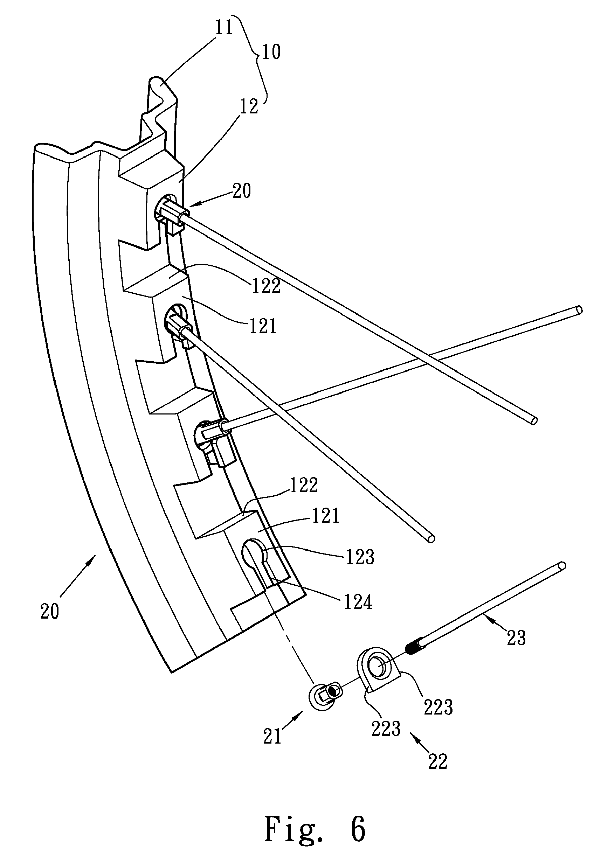

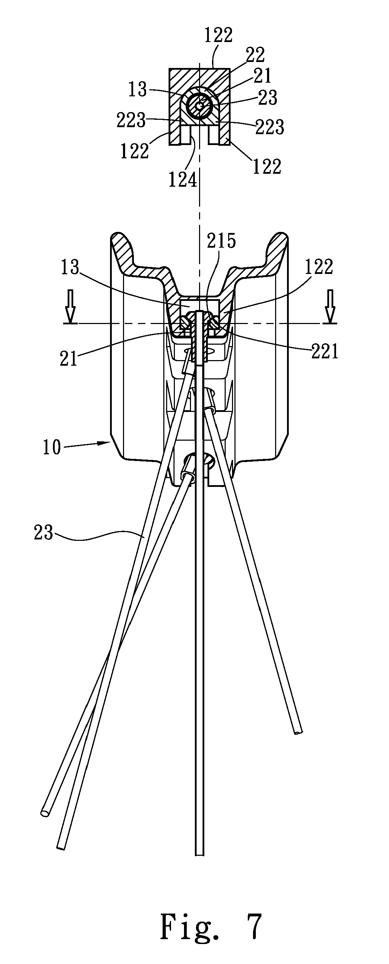

Figs. 6 and 7 show the second embodiment, wherein the positioning member 22 has two anti-rotation portions 223 respectively extending from two sides thereof. The anti-rotation portions 223 are engaged with the inside of the space 13. The engaging portion 211 has a first face 215 and the positioning member 22 has a second face 221 which is matched with the first face 215. The first and second faces 215, 221 are two curved faces.

The anti-rotation portions 223 make the positioning member 22 to be non-circular member so that the positioning member 22 is not rotated in the space 13 to more secure the connection between the spoke unit 20 and the positioning portion 12. The curved first and second faces 215, 221 allow the spoke 23 to be pivotable relative to the positioning portion 12 when the spokes 30 are connected to the hub 30.

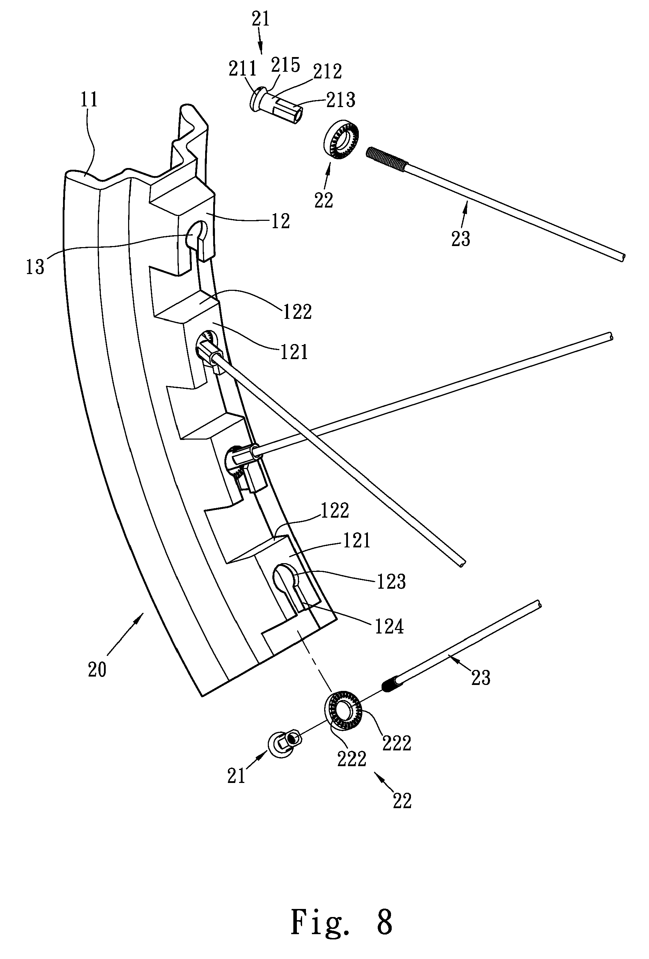

Fig. 8 shows the third embodiment, wherein the positioning member 22 has multiple grooves 222 defined in a face that is matched with the inside of the space 13. The grooves 222 are located on one side of the positioning member 22 so as to increase the friction when contacting the inside of the top face 121 of the positioning portion 12. The positioning member 22 is securely engaged with the space 13.

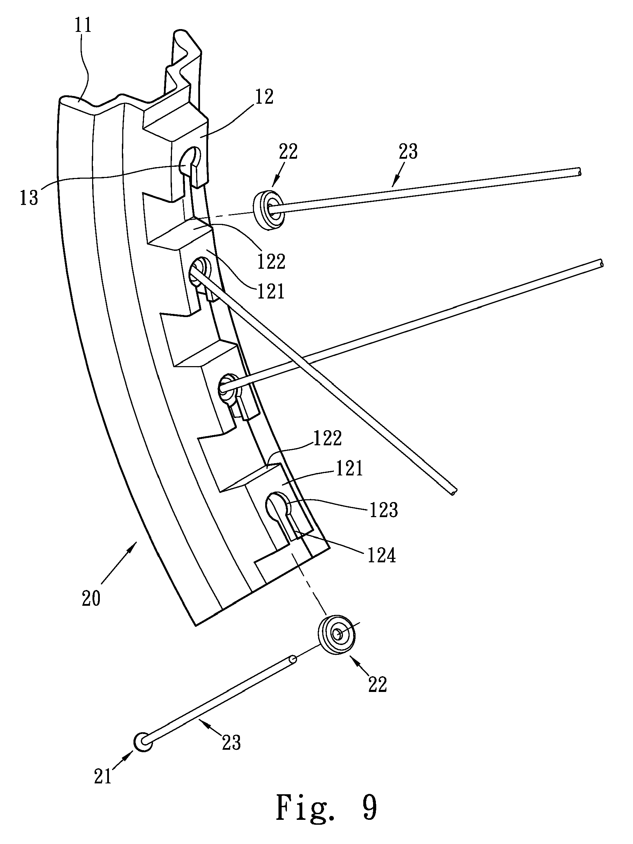

Fig. 9 shows the fourth embodiment, wherein the engaging member 21 and the spoke 23 are integrally connected to each other. In other words, the spoke 23 and the securing member 21 are integrally formed as one piece so as to save the manufacturing processes of the first and second threaded portions 214, 231. The four surfaces 213 on the clamping portion 212 can also be omitted. There will be no connection actions for connecting the securing member 21 and the spoke 23 as the first and second embodiments.

While we have shown and described the embodiment in accordance with the present invention, it should be clear to those skilled in the art that further embodiments may be made without departing from the scope of the present invention.

## Claims

1. A rim assembly comprising:
a rim being a circular rim and having a circular body, multiple positioning portions extending from an inner periphery of the rim and each positioning portion having a space defined therein, each positioning portion having an open side, and
multiple spoke units each having a first end engaged with the space via the open side and being rotatable relative to the positioning portion, a second end of each spoke unit connected with a hub, each spoke unit having a securing member and positioning member which is mounted to the securing member, the securing member connected with an end of a spoke and the positioning member positioning the securing member and the spoke in the space.

2. The assembly as claimed in claim 1, wherein each of the positioning portions is a hollow case with a top face and three side faces, the top face has a hole defined therethrough and the hole communicates with the space, the spoke unit is inserted into the hole, a slot is defined through the top face which communicates between the hole and one of the side face, the spoke unit is engaged with the space via the side face that communicates with the slot.

3. The assembly as claimed in claim 1, wherein the securing member has an engaging portion and a clamping portion which is connected to the engaging portion, the engaging portion has a flange which is engaged with the top face of the positioning portion, the clamping portion extends from the positioning member and protrudes beyond the positioning portion, the clamping portion is connected with the spoke.

4. The assembly as claimed in claim 3, wherein the clamping portion has multiple surfaces which are adapted to be clamped by a tool.

5. The assembly as claimed in claim 3, wherein the engaging portion has a first face and the positioning member has a second face which is matched with the first face, the first and second faces are two inclined faces.

6. The assembly as claimed in claim 3, wherein the engaging portion has a first face and the positioning member has a second face which is matched with the first face, the first and second faces are two curved faces.

7. The assembly as claimed in claim 3, wherein the clamping portion has a first threaded portion defined therein and the spoke has a second threaded portion which is connected to the first threaded portion.

8. The assembly as claimed in claim 1, wherein the engaging member and the spoke are integrally connected to each other.

9. The assembly as claimed in claim 1, wherein the positioning member has multiple grooves defined in a face that is matched with an inside of the space.

10. The assembly as claimed in claim 1, wherein the positioning member has two anti-rotation portions respectively extending from two sides thereof.
